# EUROPÄISCHE PATENTSCHRIFT

(11) **EP 0 716 726 B1**
(45) Veröffentlichungstag und Bekanntmachung des Hinweises auf die Patenterteilung: **04.03.1998**
(21) Anmeldenummer: 94918824.7
(22) Anmeldetag: 31.05.1994
(51) Int. Cl.: F16K 24/04

(54) **ENTLÜFTUNGSVORRICHTUNG MIT BETÄTIGUNGSMAGNET**
MAGNET-ACTUATED VENTING DEVICE
DISPOSITIF DE MISE A L'AIR LIBRE POURVU D'UN AIMANT DE COMMANDE

(30) Priorität: 20.08.1993 DE 4328043
(43) Veröffentlichungstag der Anmeldung: 19.06.1996
(73) Patentinhaber: HYDAC FILTERTECHNIK GMBH, D-66280 Sulzbach (DE)
(72) Erfinder: HORNUNG, Dieter, D-66914 Waldmohr (DE); LAUER, Victor, H., D-66809 Nalbach (DE); MARETTEK, Andreas, D-66280 Sulzbach/Saar (DE)
(74) Vertreter: Patentanwälte Bartels und Partner
(86) Internationale Anmeldenummer: EP9401764
(87) Internationale Veröffentlichungsnummer: WO9506216

(56) Entgegenhaltungen:
- DE-A- 3 327 846
- PATENT ABSTRACTS OF JAPAN vol. 7, no. 112 (M-215) (1257) 17. Mai 1983 & JP,A,58 034 279 (MATSUSHITA DENKI SANGYO) 25. August 1981 in der Anmeldung erwähnt siehe Zusammenfassung

## Beschreibung

Die Erfindung betrifft eine Entlüftungsvorrichtung mit einem Gehäuse, das mit einem zu entlüftenden Flüssigkeitssystem verbindbar ist, und mit einem in dem Gehäuse verfahrbar gehaltenen Schwimmer, der über eine Betätigungsvorrichtung für einen Entlüftungsvorgang ein Ventil ansteuert. Eine solche Vorrichtung ist aus DE-A-3 327 846 bekannt.

Dahingehende Entlüftungsvorrichtungen sind der Fachwelt in einer Vielzahl von verschiedenen Ausführungsformen bekannt. Ein Flüssigkeitssystem ist normalerweise nach außen hin abgeschlossen und steht unter Druck. Wird aus der Flüssigkeit ein Gas, insbesondere in Form von Luft, abgeschieden, sinkt der Flüssigkeitsspiegel in dem Gehäuse der an das Flüssigkeitssystem angeschlossenen Entlüftungsvorrichtung und damit auch der Schwimmer. Über die Betätigungsvorrichtung wird dann das Ventil der Entlüftungsvorrichtung im öffnenden Sinne betätigt und das angesammelte Gas kann über das Ventil entweichen, so daß ein störungsfreier Betrieb des Flüssigkeitssystems, das auch aus einem Filterelement oder einer Filteranlage bestehen kann, gewährleistet ist.

Zum Ansteuern des Ventils für einen Entlüftungsvorgang weisen die bekannten Entlüftungsvorrichtungen (DE 33 27 846 A1) als Betätigungsvorrichtung meist eine komplizierte und störanfällige Hebelmechanik auf, die im übrigen die bekannten Konstruktionen auch teuer in der Herstellung werden läßt. Ein grundsätzlicher Nachteil dieser bekannten Entlüftungsvorrichtungen mit der angesprochenen Hebelmechanik besteht ferner darin, daß insbesondere zu hohen Drücken hin, die ohne weiteres bis 350 bar betragen können, die mechanischen Konstruktionen nicht mehr in der Lage sind, gegen diesen Druck den Ventilkolben oder den Verschlußmechanismus für einen Entlüftungsvorgang zu öffnen.

Auch ist eine zentrale Fernüberwachung der bekannten Entlüftungsvorrichtungen aufgrund ihres mechanisch wirkenden Aufbaues mit vertretbarem Aufwand häufig kaum möglich. Zwar ist in der JP 58-34279 A eine zentrale Fernüberwachung bei einer Entlüftungsvorrichtung für Luft dadurch ermöglicht, daß die Position eines mit der Hebelmechanik verbundenen Schwimmers mittels eines in ihm befindlichen Permanentmagneten und mit einem von ihm betätigbaren Schalter feststellbar ist. Diese Positionsüberwachung steht jedoch in keinem Wirkzusammenhang mit der mechanischen Betätigungsvorrichtung in Form der bekannten Hebelmechanik, die in Abhängigkeit von der Lage des Schwimmers einen in dem Gehäuse vorgesehenen Entlüftungskanal öffnet oder schließt. Insofern weist dann diese bekannte Entlüftungsvorrichtung dieselben vorstehend erwähnten Nachteile auf.

Ausgehend von diesem Stand der Technik liegt der Erfindung die Aufgabe zugrunde, eine Entlüftungsvorrichtung zu schaffen, die störungsfrei im Betrieb, kostengünstig herstellbar, auch bei sehr hohen Drücken einsetzbar sowie bei Bedarf von zentraler Stelle aus überwachbar ist. Eine dahingehende Aufgabe löst eine Entlüftungsvorrichtung mit den Merkmalen des Anspruches 1.

Dadurch, daß die Betätigungsvorrichtung einen Betätigungsmagneten mit Erregerspule aufweist, die über einen durch den Schwimmer betätigbaren Schalter elektrisch derart ansteuerbar ist, daß der Betätigungsmagnet mit seinem Schaltteil das Ventil öffnend betätigt, ist eine aufwendige und störanfällige Kraftübertragungsmechanik vermieden. Vielmehr ist der elektrisch ansteuerbare Betätigungsmagnet kostengünstig mit wenigen elektrischen Bauteilen für einen Schaltvorgang sicher auslösbar und kann darüber hinaus auch bei kleinem Bauraum große Schaltkräfte aufbringen, die bei den bekannten Lösungen auch mit entsprechend groß aufbauenden Hebelarmen nicht erreichbar sind. Solche großen Betätigungskräfte werden insbesondere dann notwendig, wenn die Entlüftungsvorrichtung an Filter- oder Hydraulikkreisläufe angeschlossen ist, bei denen das abzulassende Gas unter hohem Druck in der Entlüftungsvorrichtung ansteht. Es hat sich ferner als besonders vorteilhaft erwiesen, die erfindungsgemäße Entlüftungsvorrichtung bei Prozeßanlagen der Getränkeindustrie einzusetzen, weil insbesondere kohlensäurehaltige Getränke, wie beispielsweise Bier und Sekt, im Prozeß ausgasen können und diese Gase die Wirksamkeit des Prozesses beeinträchtigen können.

Bei einer bevorzugten Ausführungsform der erfindungsgemäßen Entlüftungsvorrichtung weist das Schaltteil des Betätigungsmagneten eine Schaltstange auf, die zum Herstellen einer Verbindung zwischen dem Inneren des Gehäuses und der Umgebung über einen Entlüftungskanal das Schließteil des Ventils entgegen der Wirkung eines Kraftspeichers öffnet. Die Schaltstange des Betätigungsmagneten kann im Durchmesser klein gehalten sein und kann somit ein in der Baugröße klein aufbauendes Ventil, beispielsweise in Form eines federbelasteten Rückschlagventils, sicher betätigen.

Bei einer weiteren bevorzugten Ausführungsform der erfindungsgemäßen Entlüftungsvorrichtung ist der Schwimmer längs einer vertikal angeordneten Führungsstange verfahrbar, die als Schalter einen Reed-Schalter aufweist, der durch einen Permanentmagneten des Schwimmers an einer vorgebbaren Schaltschwelle betätigbar ist. Aufgrund der angesprochenen Längsführung des Schwimmers und des mittels eines Magneten betätigbaren Reed-Schalters ist eine im wesentlichen verzögerungsfreie Auslösung des Betätigungsmagneten an der definierten Schaltschwelle gewährleistet, bei der sich eine relevante Luftmenge, die aus der Vorrichtung abzuführen ist, im Inneren des Gehäuses befindet.

Bei einer besonders bevorzugten Ausführungsform der erfindungsgemäßen Entlüftungsvorrichtung weist der Entlüftungskanal mindestens eine drosselartig verengte Durchlaßstelle auf. Auf diese Art und Weise läßt sich selbst bei hohen Gasdrücken ein schlagartiger Entlüftungsvorgang, der eine Bedienperson gefährden könnte, vermeiden. Ferner wird auf diese Art und Weise vermieden, daß Flüssigkeitsteile mit dem Luftstrom bei einem Entlüftungsvorgang ungewollt nach außen treten können.

Bei einer weiteren besonders bevorzugten Ausführungsform der erfindungsgemäßen Entlüftungsvorrichtung mündet der Entlüftungskanal in Durchströmrichtung hinter dem Ventil in einen radialen Spalt, der begrenzt ist von dem Gehäuse und einem Gehäuseteil, das den Betätigungsmagneten aufnimmt. Hierdurch ist ein seitliches Abströmen erreicht, so daß die empfindlichen Gesichtspartien einer Bedienperson nicht angeblasen werden.

Bei einer bevorzugten Ausführungsform der erfindungsgemäßen Entlüftungsvorrichtung weist das Gehäuseteil einen Steckeranschluß für den Anschluß des Betätigungsmagneten an die Stromversorgung auf, so daß von zentraler Stelle aus die Stromversorgung erfolgen kann, was im übrigen die Überwachung der Entlüftungsvorrichtung erleichtert. Der angesprochene Steckeranschluß kann auch dazu vorgesehen sein, die Entlüftungsvorrichtung an eine zentrale Fernüberwachung anzuschließen.

Bei einer weiteren bevorzugten Ausführungsform der erfindungsgemäßen Entlüftungsvorrichtung mündet der Entlüftungskanal im Durchmesser sich erweiternd in das Innere des Gehäuses, der mittels einer Feststellvorrichtung für die Schaltstange variierbar ist. Unabhängig von dem Durchmesser des eigentlichen Entlüftungskanals kann je nach Anwendungsfall über die Feststellvorrichtung dieser Durchmesser variiert werden.

Bei einer weiteren bevorzugten Ausführungsform der erfindungsgemäßen Entlüftungsvorrichtung ist die Verfahrbarkeit des Schwimmers längs der Führungsstange durch die Feststellvorrichtung und einen am freien Ende der Führungsstange angeordneten Anschlag begrenzt. Hierdurch ist der Schwimmer zwischen zwei Anschlägen bewegbar gehalten, was den Zusammenbau der Entlüftungsvorrichtung in der Fertigung erleichtert.

Da sich mit dem Betätigungsmagneten hohe Stellkräfte ausüben lassen und dieser klein aufbaut, ist die erfindungsgemäße Entlüftungsvorrichtung bei zu entlüftenden Flüssigkeitssystemen noch einsetzbar, wo üblicherweise der Platz für eine dahingehende Entlüftungsvorrichtung konventioneller Bauart fehlen würde.

Im folgenden ist die erfindungsgemäße Entlüftungsvorrichtung anhand der Zeichnung näher erläutert.

Es zeigen:
- Fig.1: in prinzipieller Darstellung, zumindest teilweise, einen Längsschnitt durch die erfindungsgemäße Entlüftungsvorrichtung, wobei die gezeigte Darstellung der Einbaulage der Vorrichtung entspricht;
- Fig.2: eine Schaltskizze der zum Betrieb der Entlüftungsvorrichtung notwendigen elektrischen Bauteile.

Die Entlüftungsvorrichtung weist ein zweigeteiltes Gehäuse 10,12 auf. Das in der Figur gesehen untere Gehäuse 10 verjüngt sich nach unten hin und weist auf seiner Unterseite einen Anschlußstutzen 14 mit Außengewinde auf. Über dieses Außengewinde des Anschlußstutzens 14 läßt sich die Entlüftungsvorrichtung an ein Flüssigkeitssystem, beispielsweise in Form eines Filtergehäuses (nicht dargestellt), einer Hydraulikanlage anschließen. In dem Anschlußstutzen 14 verläuft mittig eine Anschlußbohrung 16, die in das Innere 18 des Gehäuses 10 mündet. Der Außenkontur des Gehäuses 10 angepaßt erweitert sich das Innere 18 im Durchmesser entsprechend nach oben hin.

Das obere Ende des Gehäuses 10 weist ein Innengewinde auf, in das das obere Gehäuse 12 mit einem Außengewinde einschraubbar ist; wobei das Gehäuse 10 mit seinem endseitigen Rand einen Anschlag für die flanschartige Erweiterung des oberen Gehäuses 12 bildet. In dem unteren Gehäuse 10 des zweiteiligen Gehäuses 10,12 ist ein Schwimmer 20 längs einer vertikal angeordneten Führungsstange 22 verfahrbar, die den Schwimmer 20 unter Beibehaltung eines Spieles durchgreift. Im Verfahrbereich des Schwimmers 20 weist die Führungsstange 22 einen Reed-Schalter 23 auf, der durch einen Permanentmagneten 25 des Schwimmers 20 betätigbar ist. Die Führungsstange 22 ist mit ihrem oberen Ende in das obere Gehäuse 12 eingeschraubt und über eine Feststellvorrichtung in Form einer Schraube 24 in ihrer gezeigten Lage festgehalten. An ihrem freien, der Anschlußbohrung 16 zugewandten Ende weist die Führungsstange 22 einen ringartigen Anschlag 26 auf. Das Innere der Führungsstange 22 ist hohl ausgebildet und ein elektrischer Anschluß 28 in Form eines Kabels an den Reed-Schalter 23 besteht.

Parallel zur Längsrichtung der Führungsstange 22 angeordnet, befindet sich danebenliegend ein Entlüftungskanal 30, der im Durchmesser sich erweiternd neben der Schraube 24 in das Innere des unteren Gehäuses 10 mündet und im oberen Gehäuse 12 verläuft. Je nachdem, wie man die Schraube 24 verdreht, kann diese, sofern dies gewünscht ist, einen Teil des Mündungsquerschnittes des Entlüftungskanals 30 verdecken und mithin eine weitere Drosselung des Luft- oder Gasstromes ergeben. Mit seinem anderen Ende mündet der Entlüftungskanal 30 in den Ventilraum 32, in dem ein federbelastetes Rückschlagventil 34 in seiner Schließstellung dargestellt ist. Oberhalb des Ventilraumes 32 ist der Entlüftungskanal 30 fortgeführt und in ihm ist eine Schaltstange 36 mit radialem luftdurchlassendem Spiel bewegbar gehalten. Anschließend zweigt der Entlüftungskanal 30 radial nach außen ab und mündet in einen radialen Ringspalt 38, der von einem Absatz eines zylindrischen Inneneinsatzes 40 des Gehäuses 12 und dem oberen Ende desselben begrenzt ist, das an dieser Stelle eine zylindrische Ausnehmung für die Aufnahme des Inneneinsatzes 40 aufweist. Dieser Ringspalt 38, der wiederum Teil des Entlüftungskanals 30 ist, mündet in eine axial verlaufende Drosselstelle 42, die wiederum in einen radialen Spalt 44 des Entlüftungskanals 30 mündet, der begrenzt ist von dem oberen Gehäuse 12 und einem Gehäuseteil oder Abdeckung 46, das den Betätigungsmagneten 48 aufnimmt, der am Gehäuse 12 angeschraubt ist.

Der einen Teil der Betätigungsvorrichtung darstellende Betätigungsmagnet 48 ist ein Bauteil, das in verschiedensten Baugrößen und Bauformen mit unterschiedlichen Betätigungskräften - auch "ex-geschützt" - auf dem Markt, beispielsweise bei der Firma bso Steuerungstechnik GmbH, erhältlich ist. Demgemäß wird auf den Betätigungsmagneten 48 nur noch insofern eingegangen, als es für die Erläuterung der Erfindung notwendig ist.

Wesentlicher Bestandteil des Betätigungsmagneten 48 ist eine elektrisch erregbare Spule, mit der ein Schaltteil in Form der Schaltstange 36 betätigbar ist. Der in der Figur gezeigte Betätigungsmagnet 48 ist derart ausgelegt, daß bei der elektrischen Erregung seiner Spule die Schaltstange 36 sich nach unten bewegt und das Rückschlagventil 34 öffnet. Nach Wegnahme der Spannung von der Feldspule wird unter dem Einfluß des Kraftspeichers in Form der Druckfeder des Rückschlagventils 34 die Kugel gegen ihren Ventilsitz gepreßt und die Schaltstange 36 in ihre in der Figur gezeigte Ausgangsstellung zurückverfahren.

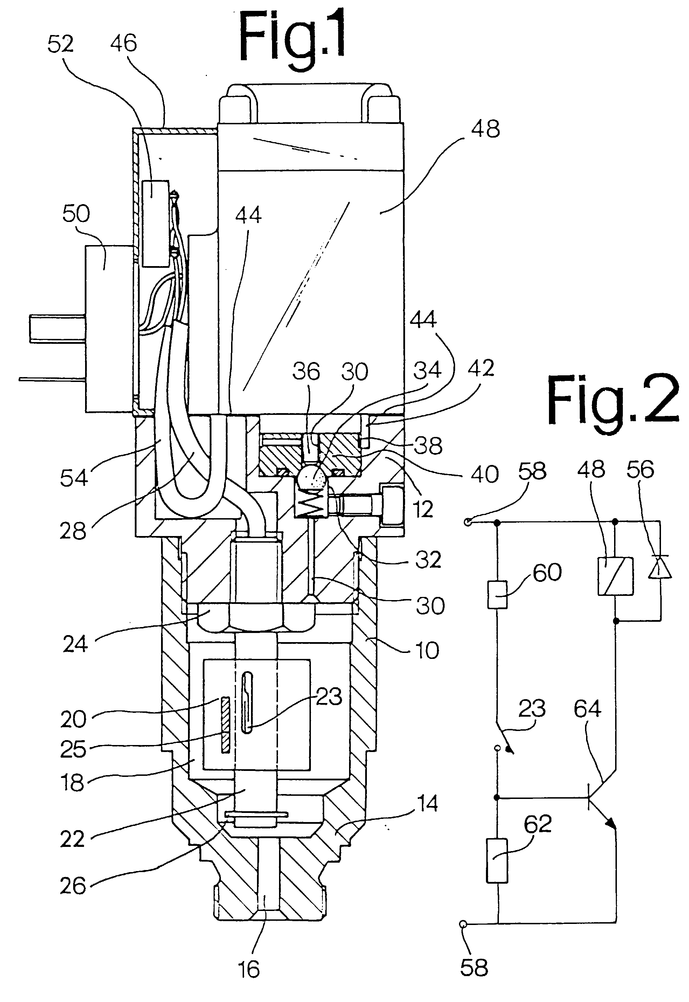

Das Gehäuseteil 46 weist einen Steckeranschluß 50 für den Anschluß des Betätigungsmagneten 48 an die Stromversorgung auf. Das vom Reed-Schalter 23 kommende elektrische Kabel 28 ist an eine die Schaltvorgänge steuernde Elektronikplatine 52 angeschlossen, von der wiederum zur Ansteuerung des Betätigungsmagneten 48 ein an diesen angeschlossenes Steuerkabel 54 wegführt. Die dahingehende elektrische Verschaltung ist prinzipiell in der Schaltskizze nach der Fig.2 dargestellt. Parallel zu dem Schaltmagnet 48 ist eine Freilaufdiode 56 geschaltet. Die gesamte Schaltung ist über Anschlüsse 58 an eine 24-Volt-Spannungsquelle anschließbar. In dem Zweig, der zu dem im geöffneten Zustand gezeigten Schalter 23 führt, sind zwei Widerstände 60 und 62 geschaltet mit 5000 Ohm bzw. 500 Ohm. Zusätzlich verfügt die Schaltung nach der Fig.2 noch über einen Schalttransistor 64 üblicher Bauart.

Die erfindungsgemäße Entlüftungsvorrichtung funktioniert nun wie folgt. Wird aus dem Flüssigkeitssystem, beispielsweise in Form eines Filtergehäuses, Luft ausgeschieden, sinkt der Flüssigkeitsspiegel (nicht dargestellt) im Inneren 18 des Gehäuses 10 und der darin befindliche Schwimmer 20 bewegt sich in der Figur gesehen nach unten. Bei einer vorgebbaren Schaltschwelle oder einem Schaltpunkt, die bzw. der abhängig ist von der innerhalb des Gehäuses 10 in zulässiger Weise bevorrateten Luft- oder Gasmenge, schaltet der Schwimmer 20 mittels seines Permanentmagneten 25 den in der Führungsstange 22 befindlichen Reed-Schalter 23, wodurch über die Kabel 28 und 54 sowie die Elektronikplatine 52 der Betätigungsmagnet 48 derart geschaltet wird, daß die Schaltstange 36 ausfährt und hierbei das Rückschlagventil 34 in seine geöffnete Stellung verbringt. Die im Inneren des Gehäuses 10 angesammelte Luft kann dann über den Entlüftungskanal 30, den Ringspalt 38, die Drosselstelle 42 sowie den radialen Spalt 44 nach außen abströmen mit der Folge, daß der Flüssigkeitsspiegel im Inneren 18 des Gehäuses 10 wiederum steigt, mit der Folge, daß der Schwimmer 20 den Reed-Schalter 23 erneut betätigt und der Betätigungsmagnet 48 abgeschaltet wird, wobei die Druckfeder über die Ventilkugel das Rückschlagventil 34 dichtend verschließt. Die Entlüftungsvorrichtung steht dann für einen erneuten Lüftungsvorgang bereit.

## Patentansprüche

1. Entlüftungsvorrichtung mit einem Gehäuse (10,12), das mit einem zu entlüftenden Flüssigkeitssystem verbindbar ist, und mit einem in dem Gehäuse (10) verfahrbar gehaltenen Schwimmer (20), der über eine Betätigungsvorrichtung für einen Entlüftungsvorgang ein Ventil (34) ansteuert, mittels dessen ein Entlüftungskanal (30) verschließbar ist, dadurch gekennzeichnet, daß die Betätigungsvorrichtung einen Betätigungsmagneten (48) mit Erregerspule aufweist, die über einen durch den Schwimmer (20) betätigbaren Schalter (23) elektrisch derart ansteuerbar ist, daß der Betätigungsmagnet (48) mit seinem Schaltteil das Ventil (34) öffnend betätigt.

2. Entlüftungsvorrichtung nach Anspruch 1, dadurch gekennzeichnet, daß das Schaltteil des Betätigungsmagneten (48) eine Schaltstange (36) aufweist, die zum Herstellen einer Verbindung zwischen dem Inneren (18) des Gehäuses (10) und der Umgebung über einen Entlüftungskanal (30) das Schließteil des Ventiles (34) entgegen der Wirkung eines Kraftspeichers öffnet.

3. Entlüftungsvorrichtung nach Anspruch 1 oder 2, dadurch gekennzeichnet, daß der Schwimmer (20) längs einer vertikal angeordneten Führungsstange (22) verfahrbar ist, die als Schalter (23) einen Reed-Schalter aufweist, der durch einen Permanentmagneten (25) des Schwimmers (20) an einer vorgebbaren Schaltschwelle betätigbar ist.

4. Entlüftungsvorrichtung nach Anspruch 2 oder 3, dadurch gekennzeichnet, daß der Entlüftungskanal (30) mindestens eine drosselartig verengte Durchlaßstelle (42) aufweist.

5. Entlüftungsvorrichtung nach einem der Ansprüche 2 bis 4, dadurch gekennzeichnet, daß der Entlüftungskanal (30) in Durchströmrichtung hinter dem Ventil (34) in einen radialen Spalt (44) mündet, der begrenzt ist von dem Gehäuse (12) und einem Gehäuseteil (46), das den Betätigungsmagneten (48) aufnimmt.

6. Entlüftungsvorrichtung nach Anspruch 5, dadurch gekennzeichnet, daß das Gehäuseteil (46) einen Steckeranschluß (50) für den Anschluß des Betätigungsmagneten (48) an die Stromversorgung aufweist.

7. Entlüftungsvorrichtung nach einem der Ansprüche 3 bis 6, dadurch gekennzeichnet, daß der Entlüftungskanal (30) im Durchmesser sich erweiternd in das Innere des Gehäuses (10) mündet, der mittels einer Feststellvorrichtung (24) für die Führungsstange (22) variierbar ist.

8. Entlüftungsvorrichtung nach Anspruch 7, dadurch gekennzeichnet, daß die Verfahrbarkeit des Schwimmers (20) längs der Führungsstange (22) durch die Feststellvorrichtung (24) und einen am freien Ende der Führungsstange (22) angeordneten Anschlag (26) begrenzt ist.

## Claims

1. Venting device with a housing (10, 12), which can be connected to a liquid system to be vented, and with a float (20) displaceably held in the housing (10), which float by way of an actuating device for a venting process controls a valve (34), by means of which a venting channel (30) can be closed off, characterised in that the actuating device comprises an actuating magnet (48) with an excitation coil, which can be controlled electrically by way of a switch (23) able to be actuated by the float (20) so that the actuating magnet (48) with its switching part actuates the valve (34) so that it opens.

2. Venting device according to Claim 1, characterised in that the switching part of the actuating magnet (48) comprises a switching rod (36), which for establishing a connection between the inside (18) of the housing (10) and the atmosphere by way of a venting channel (30), opens the closing part of the valve (34) against the action of an accumulator.

3. Venting device according to Claim 1 or 2, characterised in that the float (20) is displaceable along a guide rod (22) arranged vertically, which as a switch (23) comprises a reed switch, which can be actuated by a permanent magnet (25) of the float (20) at a switching threshold which can be predetermined.

4. Venting device according to Claim 2 or 3, characterised in that the venting channel (30) comprises at least one opening point (42) constricted in the manner of a throttle.

5. Venting device according to one of Claims 2 to 4, characterised in that in the throughflow direction behind the valve (34), the venting channel (30) opens into a radial gap (44), which is restricted by the housing (12) and a housing part (46), which receives the actuating magnet (48).

6. Venting device according to Claim 5, characterised in that the housing part (46) comprises a plug connection (50) for the connection of the actuating magnet (48) to the current supply.

7. Venting device according to one of Claims 3 to 6, characterised in that the venting channel (30), with its diameter widening out, opens into the inside of the housing (10), which can be varied by means of a locking device (24) for the guide rod (22).

8. Venting device according to Claim 7, characterised in that the displaceability of the float (20) along the guide rod (22) is restricted by the locking device (24) and a stop (26) located at the free end of the guide rod (22).

## Revendications

1. Dispositif de mise à l'air libre pourvu d'un boîtier (10,12), qui peut être relié à un système de liquide à purger, et d'un flotteur (20) maintenu de façon déplaçable dans le boîtier (10), qui amorce par un dispositif de commande pour une opération de mise à l'air libre une vanne (34), au moyen de laquelle un canal de mise à l'air libre (30) peut être obturé, caractérisé en ce que le dispositif de commande présente un aimant de commande (48) avec bobine d'excitation, qui peut être amorcée électriquement au moyen d'un interrupteur (23) pouvant être commandé par le flotteur (20) de telle façon que l'aimant de commande (48) actionne l'ouverture de la vanne (34) avec un élément de commutation.

2. Dispositif de mise à l'air libre selon la revendication 1, caractérisé en ce que l'élément de commutation de l'aimant de commande (48) présente une tige de commutation (36) qui, pour établir une liaison entre l'intérieur (18) du boîtier (10) et l'environnement par un canal de mise à l'air (30), ouvre l'élément de fermeture de la vanne (34) dans le sens contraire à l'effet d'un accumulateur d'énergie.

3. Dispositif de mise à l'air selon la revendication 1 ou 2, caractérisé en ce que le flotteur (20) peut être déplacé le long d'une tige de guidage (22) disposée verticalement, qui présente comme interrupteur (23) un interrupteur reed qui peut être actionné par un aimant permanent (25) du flotteur (20) sur un seuil de commutation prédéfinissable.

4. Dispositif de mise à l'air libre selon la revendication 2 ou 3, caractérisé en ce que le canal de mise à l'air libre (30) présente au moins un point de passage (42) rétréci à la façon d'un étranglement.

5. Dispositif de mise à l'air libre selon l'une quelconque des revendications 2 à 4, caractérisé en ce que le canal de mise à l'air libre (30) débouche dans le sens de l'écoulement derrière la vanne (34) dans une fente (44) radiale qui est limitée par le boîtier (12) et une partie du boîtier (46) dans lequel est logé l'aimant de commande (48).

6. Dispositif de mise à l'air libre selon la revendication 5, caractérisé en ce que la partie du boîtier (46) présente un branchement par fiche (50) pour le raccordement de l'aimant de commande (48) à l'alimentation électrique.

7. Dispositif de mise à l'air libre selon l'une quelconque des revendications 3 à 6, caractérisé en ce que le canal de mise à l'air libre (30) débouche à l'intérieur du boîtier (10) en s'élargissant en diamètre qu'on peut faire varier au moyen d'un dispositif de blocage (24) pour la tige de guidage (22).

8. Dispositif de mise à l'air libre selon la revendication 7, caractérisé en ce que la possibilité de déplacement du flotteur (20) le long de la tige de guidage (22) est limitée par le dispositif de blocage (24) et une butée (26) disposée sur l'extrémité libre de la tige de guidage (22).
